# EUROPEAN PATENT APPLICATION

(11) **EP 1 370 093 A1**
(43) Date of publication of application: **10.12.2003**
(21) Application number: 02291353.7
(22) Date of filing: 03.06.2002
(51) Int. Cl.: H04Q 3/00, H04M 7/00

(54) **New generation telecommunications network with gateways for voice transmission**

(71) Applicant: ALCATEL, 75008 Paris (FR)
(72) Inventor: Vander Straeten, Christian Julien, B-2070 Zwijndrecht (BE); Vaaraniemi, Arto-Olavi, D-70184, Stuttgart (DE)
(74) Representative: Narmon, Gisèle Marie Thérèse

(57) **Abstract**

A gateway (AG1) for transmission of voice over a core data network (DN) of a New Generation telecommunication Network (NGN). The gateway comprises a legacy exchange (LE), an integrated gateway (IG) and a signaling termination and translation device (STT) operating according to a signaling standard. The legacy exchange (LE) is a reused Public Switched Telecommunication Network [PSTN], whereby the gateway is relatively cheaper than dedicated gateways for NGN networks.

## Description

The present invention relates to a telecommunication network comprising a core data network coupled to external equipment via a gateway controlled by a call server.

Most of the telecommunication networks existing today are public voice telecommunication networks based on Time Division Multiplexing [TDM] exchanges with legacy exchanges interconnecting a Public Switched Telecommunication Network [PSTN] and user equipment. The legacy exchanges are Local EXchanges [LEX] or Trunk EXchanges [TEX], whilst the user equipment is for instance constituted by Private Automatic Branch eXchanges [PABX] and subscriber equipments.

In parallel to these classical networks, emerge so-called New Generation Networks [NGN] with dedicated gateways located between a core data network and the user equipment or between the core data network and ports of other voice telecommunication networks. The core data network operates according to the Internet Protocol [IP] or to the Asynchronous Transfer Mode [ATM], and the gateways are necessary for the transmission of voice over this core data network. These gateways are controlled from a call server.

The migration from an existing classical public voice telecommunication network to a new generation telecommunication network requires full replacement of the existing legacy exchanges by relatively expensive new and dedicated gateways. Also the development and manufacturing cost of a new generation gateway is very high.

An object of the present invention is to provide a new generation telecommunication network, and more particularly the gateways thereof, at relatively low cost.

According to the invention, this object is achieved due to the fact said gateway comprises a legacy exchange, an integrated gateway and a signaling termination and translation device, said signaling termination and translation device being adapted to control said legacy exchange and said integrated gateway by means of information received from said call server, said legacy exchange being connected to said external equipment, and said integrated gateway interconnecting said legacy exchange and said core data network.

In other words, additional circuitry is coupled to an existing or new legacy exchange in order to make it usable as a gateway for the NGN network.

In this way, a legacy exchange of the classical public voice telecommunication network is used to provide, at low cost, a gateway adapted to operate in a new generation telecommunication network. This brings the benefits of the new generation telecommunication network to the legacy exchange and provides an inexpensive migration method from a classical public voice exchange towards a new generation telecommunication network. It is thus a much cheaper solution than deploying new gateways.

Furthermore, the continuity in management system, at the level of element management, is assured for a network operator who migrates from a Public Switched Telecommunication Network [PSTN] to a New Generation Network [NGN]. Beyond the obvious investment cost reduction, the operating personnel will continue to work with the familiar Operations and Management [O&M] systems and methods. This is especially important since NGN networks are in service in parallel with the classical PSTN network, and this for quite some time.

The present invention thus allows a migration to NGN networks at relatively low cost by cheaper gateway investments and by reusing the existing operator infrastructure around the switch: management systems, billing systems, etc.

Another characterizing embodiment of the present invention is that said legacy exchange is a voice public switched telecommunication network switch without user part call logic, and that said call server is adapted to assume the user part call logic of said legacy exchange.

The inherent user part call logic of the legacy exchange is no longer used in the gateway since the user part call logic is centralized in the call server.

The present invention is further characterized in that said signaling termination and translation device is adapted to operate with said call server, said legacy exchange and said integrated gateway according to predetermined signaling protocols.

In a preferred embodiment, said signaling termination and translation device is adapted to terminate and to interpret an ITU-H.248, or similar, signaling standard received from said call server.

Also in a preferred embodiment, said signaling termination and translation device is connected to said legacy exchange by means of an Intelligent Network Application Part [INAP] interface.

Further characterizing embodiments of the present Gateway for voice in a telecommunication network are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a telecommunication network comprising at least one gateway (AG1) according to the invention; and
Fig. 2 represents the telecommunication network of Fig. 1 with the gateway (AG1) shown in more detail.

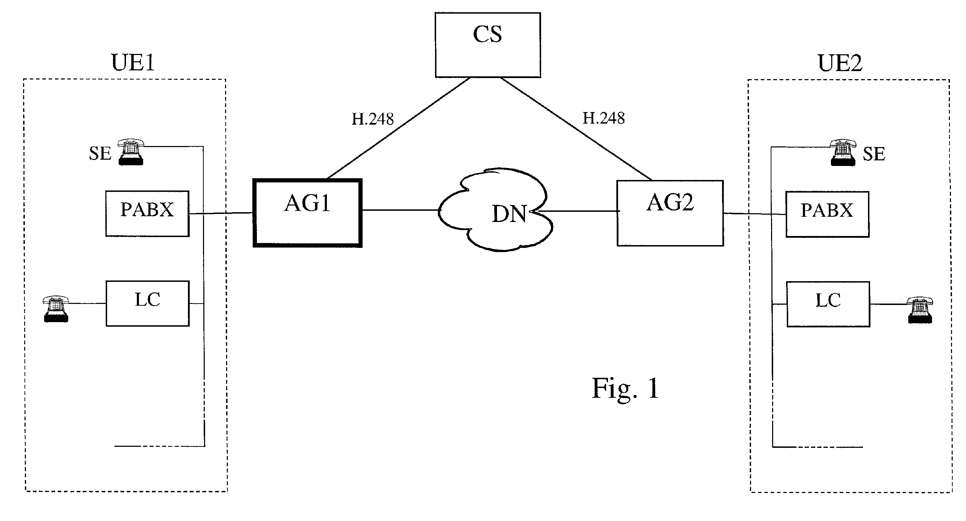

The general simplified network diagram shown at Fig.1 represents a New Generation Network [NGN] with a core data network DN coupled to external equipment UE1, UE2 via gateways AG1, AG2. The core data network DN operates according to the Internet Protocol [IP] or to the Asynchronous Transfer Mode [ATM]. The external equipment UE1, UE2 is generally constituted by subscriber equipment SE and/or by Time Division Multiplex [TDM] circuits, which may be Private Automatic Branch eXchanges PABX, subscriber line concentrators LC and/or ports to other voice communications networks. The gateways AG1, AG2 are adapted for the transmission of voice over this core data network DN and are controlled by a call server, also called "soft-switch" CS, which is typically common for many gateways of the NGN.

In more detail, the NGN network in this example is a Class 5 arrangement with a User to Network Interface [UNI] access on the TDM side and, as will be explained below, the gateways AG1 and AG2 are compliant with the standard for gateway products. The principle is equally valid for a Class 4 arrangement with a Network-Node Interface [NNI] access on the TDM side.

The gateways AG1, AG2 translate the external equipment TDM signals, in a form adapted for a Public Switched Telecommunication Network [PSTN], into a format that can be transported over an IP or ATM core data network DN. To this end, the gateways also provide the interconnection circuitry, will connect tones to the PSTN side, etc. The gateways AG1, AG2 may be "Trunk Gateways" terminating PSTN NNI or "Access Gateways" terminating PSTN UNI.

The call server CS controls the gateways, executes call control logic and provides many telephonic supplementary services, terminates PSTN signaling, etc. The standard "H.248" signaling is used between the call server and the gateways AG1, AG2. Other relevant protocols are for instance the well known IPDC, SGCP, MGCP.

When a PSTN is to be migrated to an NGN, previous generation PSTN switches are reused rather than replacing the PSTN switches by dedicated new gateways. Alternatively, new gateways can be developed and manufactured by reusing existing PSTN system components, rather than to redesign all functions from scratch. The PSTN switch may be a Local Exchange [LEX] or a Trunk EXchange [TEX] - the corresponding gateway will be an Access Gateway or a Trunk Gateway respectively.

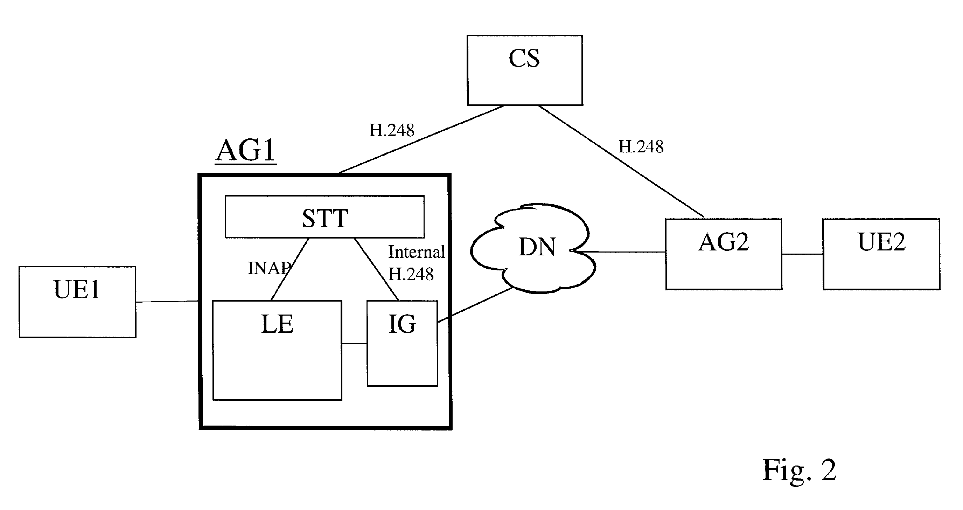

The same network diagram as shown in Fig. 1 but where existing PSTN switch equipment is reused in at least one gateway, say AG1, is depicted in Fig. 2.

The gateway AG1 implements all TDM switching and all "intelligence", normally found in an NGN gateway. According to the invention, AG1 comprises the following building blocks:
- a signaling termination and translation device STT;
- a Legacy Exchange LE; and
- an Integrated Gateway IG.

The "H.248" signaling received from the call server CS is terminated and interpreted by the "H.248" signaling termination and translation device STT. STT is typically implemented on a server platform such as UNIX™, LINUX™, etc. STT derives, from the "H.248" signaling, two main command streams with following protocols:
- an internal Intelligent Network Application Part [INAP] interface handling Intelligent Network [IN] commands (or any equivalent interface) towards the reused PSTN switch or legacy exchange LE; and
- an Internal H.248 command stream towards the integrated gateway IG.

Controlled by the INAP interface, the legacy exchange LE executes elementary connectivity functions such as the Service Switching Function [SSF] as described in the standard ITU-T IN protocol. However, in this reused PSTN switch, which is for instance a System 12 [S12] exchange of Alcatel™, the user part call logic comprising call control and service logic, and which is an inherent part of any classical PSTN switch, may no longer be used. Indeed, the call server CS will now assume this user part call logic that is commonly controlling all the gateways AG1, AG2.

The integrated gateway IG is a small built-in trunk gateway that mainly translates Time Division Multiplexing [TDM] into Voice over Internet Protocol [VoIP] or Voice over ATM [VtoA]. The architecture of the integrated gateway IG is rather simple since all "intelligent" functions, e.g. tone generation, announcements, etc., are handled by the "old" PSTN switch LE. Furthermore, because it is controlled through a standard H.248 signaling, any commercially available trunk gateway, conforming to NGN standards may be used as integrated gateway.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A telecommunication network comprising a core data network (DN) coupled to external equipment (UE1) via a gateway (AG1) controlled by a call server (CS),
**characterized in that** said gateway (AG1) comprises a legacy exchange (LE), an integrated gateway (IG) and a signaling termination and translation device (STT),
said signaling termination and translation device (STT) being adapted to control said legacy exchange (LE) and said integrated gateway (IG) by means of information received from said call server (CS),
said legacy exchange (LE) being connected to said external equipment (UE1), and
said integrated gateway (IG) interconnecting said legacy exchange (LE) and said core data network (DN).

2. The telecommunication network according to claim 1,
**characterized in that** said legacy exchange (LE) is a voice public switched telecommunication network switch without user part call logic,
and **in that** said call server (CS) is adapted to assume the user part call logic of said legacy exchange (LE).

3. The telecommunication network according to claim 2, **characterized in that** said signaling termination and translation device (STT) is adapted to operate with said call server (CS), said legacy exchange (LE) and said integrated gateway (IG) according to predetermined signaling protocols.

4. The telecommunication network according to claim 3, **characterized in that** said signaling termination and translation device (STT) is adapted to terminate and to interpret an ITU-H.248, or functionally equivalent, signaling standard interfacing said signaling termination and translation device with said call server (CS).

5. The telecommunication network according to claim 3, **characterized in that** said signaling termination and translation device (STT) is connected to said legacy exchange (LE) by means of an Intelligent Network Application Part (INAP) interface or functionally equivalent.

6. The telecommunication network according to claim 1, **characterized in that** said integrated gateway (IG) is a built-in trunk gateway.

7. The telecommunication network according to claim 1, **characterized in that** said core data network (DN) is an Internet Protocol [IP] network.

8. The telecommunication network according to claim 1, **characterized in that** said core data network (DN) is an Asynchronous Transfer Mode [ATM] network.

9. The telecommunication network according to claim 1, **characterized in that** said external equipment (UE1) is subscriber equipment (SE).

10. The telecommunication network according to claim 1, **characterized in that** said external equipment (UE1) is constituted by Time Division Multiplex [TDM] circuits.

11. The telecommunication network according to claim 1, **characterized in that** said telecommunication network comprises a plurality similar gateways (AG1, AG2) coupling said core data network (DN) to external equipments (UE1, UE2) and commonly controlled by said call server (CS).
